# EUROPEAN PATENT SPECIFICATION

(11) **EP 2 288 552 B1**
(45) Date of publication and mention of the grant of the patent: **15.08.2012**
(21) Application number: 09742886.6
(22) Date of filing: 09.03.2009
(51) Int. Cl.: B65D 1/34, B65D 21/02, B65D 21/04, D21J 7/00, B29C 51/16, B29C 51/02

(54) **FOOD PACKAGING**
LEBENSMITTELVERPACKUNG
EMBALLAGE ALIMENTAIRE

(30) Priority: 08.05.2008 EP 08155913
(43) Date of publication of application: 02.03.2011
(73) Proprietor: Huhtamaki Nederland B.V., NL-8801 JB Franeker (NL)
(72) Inventor: CABELL, Julian, Newbury Berkshire RG14 6JJ (GB); KUIPER, Harald John, 8445 SC Heerenveen (NL); DIJKSTRA, Wijbe, 9035 DD Dronrijp (NL); POST, Johannes Jelle, 8604 VB Sneek (NL)
(74) Representative: van Westenbrugge, Andries
(86) International application number: PCT/NL2009/050104
(87) International publication number: WO 2009/136783

(56) References cited:
- EP-A- 1 145 822
- WO-A-92/16419
- NL-A- 9 002 055
- US-A- 3 027 045
- US-A- 4 337 116

## Description

### Background

The present invention relates to a packaging, such as a food tray, comprising a moulded fibre layer which is laminated with a polymer foil, and a method for making this food tray.

A well-known packaging is produced in a packaging line from a sheet of thermoplastic material which is deep-drawn, filled with product and sealed with a thermoplastic film. This type of packaging has several drawbacks. It requires a substantial amount of thermoplastic material, which causes a lot of waste. The rigidity of the packaging is limited, as well as the shape of the packaging. If, on the other hand, the rigidity increases, the height of the packaging is limited.

EP-B-196.799 of a subsidiary of the current applicant discloses a packaging or container which can be used in automated packaging lines, for food products. The packaging is formed of a moulded fibre pulp tray of a simple form which is laminated at a filling site with a multilayered thermoplastic film, filled with product, subsequently sealed with a composite web which is heat sealed to the laminated film, and subsequently cut into separate packagings. The production method used for the moulded fibre pulp trays is not discussed. The packaging disclosed in this document leaves room for improvement on many fields. It for instance has a cardboard sleeve with printed thereon information about the contents. This increases the amount of waste. Furthermore, de-stacking can cause problems. Ovenability may be improved.

US-4,337,116, upon which the preamble of claim 1 is based, also of a subsidiary of the current applicant, discloses a food tray which has a moulded fibre tray which is first moulded from fibre pulp. The moulded fibre tray is then in mould dried in mating dies used for "after-pressing". 100 % Bleached Kraft wood fibres are used for the pulp. A polyethylene terephtalate(PET) film is laminated directly onto the moulded fibre tray. De-stacking of the tray can cause problems. The food tray does not serve to store or conserve food. It has no means for closing off the tray.

From a environmental point of view, in general the use of thermoplastic material should be avoided as much as possible. Furthermore, the packaging should preferably be produced from recycled material and/or material which is bio-degradable. Known moulded fibre technology has potential advantages over known packagings, such as deep drawn packagings, but still needs to be improved in order to compete with these packagings.

### Summary of the Invention

The invention aims to improve food packaging.

Another and/or alternative object of the invention is to limit the use of raw materials in food packaging, and to improve the recyclability of food packaging.

Yet another or alternative object of the invention is to provide a food packaging which is easy to handle.

According to a first aspect of the invention this is realized with a food packaging, for instance a food tray, having a base and side walls from a dimensionally stable moulded fibre layer for providing rigidity to said packaging and enclosing at least one inside volume, a polymer foil layer laminated to said moulded fibre layer, and de-stacking notches within the circumference of, and adjacent to, a circumferential rim, for preventing the outside of said food packaging touching the inside of another, identical food packaging when it is stacked in the food packaging.

The notches allow a better de-stacking, which is important as handling speed at filling lines increases. Furthermore, a better stacking can be achieved, resulting in more trays in a smaller volume, a stable stack of products and avoiding horizontal movement. According to another aspect of the invention, this is realized through a method for producing a food packaging, comprising the steps of producing a suction-moulded pre-shape, free-drying said suction-moulded pre-shape, pressing said moulded pre-shape in a set of pressure moulds with a pressure of at least 400,000 N/m^2, and applying a lamination film to the inside of said heated pre-shape, comprising the further step of applying underpressure to bottom and overpressure to the inside of the pre-shape while applying the lamination film

This method allows a relatively good "carbon footprint". This means that the energy consumption of this type of packaging from raw material to end-of-life is lower compared to existing packaging solutions. The packaging can be light weight, and yet fulfil all the demand made on modem packaging.

In an embodiment of the method, the overpressure is applied via plug assisted lamination in which hot air is provided out of a plug with a plurality of nozzles blowing said hot air on the lamination film surface. This method allows a lamination which gives a uniform layer thickness for the laminate film and provides the packaging with uniform barrier properties for gases and liquids.

In an embodiment of the method, the dies used for pressing (sometimes called "after pressing") are preheated, at a temperature of for instance between 100 and 200 degrees Celsius. Before pressing, the free dried moulded fibre shapes may be sprayed with water in order to improve the surface smoothness. This improves the lamination and gives a high quality look.

In an embodiment of the packaging, the notches are substantially solid notches. This improves the de-nesting capabilities. In another embodiment, the notches are provided near every corner of the packaging. In that way, the de-stacking or de-nesting properties become independent of the orientation of the trays.

In yet another embodiment, the notches extend in the plane formed by said rim. Thus, the notches provide good spacers. In another embodiment, the notches extend out of the plane defined by the walls and to the inside of the packaging. This prevents the outside of a wall of a packaging which is stacked or nested into another one to touch the inside of the wall of that outside packaging. In an embodiment, the notches comprise an abutment surface extending to the inside of the packaging, in an embodiment normal to a nearby wall part, for preventing the side wall from touching another identical food packaging when it is stacked in the food packaging.

In an embodiment, the base comprises a circumferentially embossed rim, reaching out to the inside of the packaging. This provides additional rigidity to the base.

In an embodiment, the side walls of the packaging have a circumferential shoulder for providing rigidity normal to the side walls.

In an embodiment, the side walls are connected by corner parts which have an inward curvature, in an embodiment said corner parts form a plateau just below the rim, in an embodiment the notches extend from said plateau. The plateau provides additional rigidity. Furthermore, it can provide a rigid base for the notches.

In another embodiment, the food packaging is further provided with a top seal film adhered to said rim. The rim provides a good base for adhering the top seal film. In an embodiment, said rim has a turned-down outer part. This turned-down part improves the peelability of a top seal film and avoids that the lamination film comes off of the moulded fibre layer when trying to remove the top seal film. In an embodiment, the moulded fibre layer has a circumferential rim on said side walls which has a turned-down, circumferential rim portion.

In an embodiment, the edge of the circumferential rim is coated. This can for instance be done by contacting the circumferential edge with a coating material. This prevents loose fibre parts from forming. These ends in particular form when the edges have been cut. In an embodiment, the coating can cover part of the rim in order to make the top seal film easy peelable.

In an embodiment, the fibre pulp mass comprises at least 20 % by weight of pure grade industrial waste fibre material and comprises an additive for providing a hydrophilic surface to the moulded fibre layer.

The invention furthermore provides a method for producing a food packaging, comprising the steps of producing a suction-moulded pre-shape. Next, the pre-shapes are free-dried, for instance in an oven. After drying, the pre-shape is pressed in a pressure mould with a pressure of at least 400,000 N/m^2. This pressure can be at least 800,000 N/m^2. For obtaining a high-grade product, a pressure of at least 1,200,000 N/m^2 can be used.

In a next step, the pressed pre-shape can be preheated. Next, a lamination film will be applied to the inside of said heated pre-shape. After completion, free-standing food packagings are stacked. Next, the packagings will be delivered to a customer. The customer will de-stack the trays, fill them with a product, often a food product, and apply a top seal film to seal the product.

The packaging of the current invention has a pressed moulded fibre layer which makes it possible to make a food packaging with a high dimensional stability. This packaging can be used in an oven or microwave to heat the food product inside. This makes the packaging suitable for ready meals, for instance. The packaging can even be placed in an oven or microwave directly from a frozen condition. Using the specific mixture of fibre material in the pulp is a optimal trade off for preventing smell during oven heating, and use of recycled material.

It was found that the moulded fibre layer can provide sufficient dimensional stability to the packaging. Therefore, the laminated foil layer can be very thin. In fact, a thickness of less than about 100 microns is possible. In practice, a thickness of about 15-200 microns seems feasible.

Thus, the combination of a pressed moulded fibre layer and lamination allows to combine the best of both worlds in a packaging for food products, in particular for food products which need to be (re) heated before use. Furthermore, in this packaging food products can be kept warm for a longer period. The packaging furthermore can be handled with a minimal risk of touching hot surfaces.

In this invention, in an embodiment, the fibre pulp mass is composed partly of pure grade industrial waste fibre material. This is waste material from large-scale production processes, for instance cut-away parts from small cardboard boxes and packagings. In order to allow heating and to reduce smell in an oven or microwave, an amount of virgin fibre material is added. Usually at least about 40 % by weight of dry fibre material. From an environmental point of view, the amount of virgin fibre material is less than 65 % by weight. A large reduction of smell is realised when the virgin fibre material is chemo-mechanical fibre material, for instance known is CMP, CTMP, cTMP, HTCTMP or mixtures thereof. This material as such is for instance described in US-7.005.034 and US-6.770.129. This fibre material is also available from Rottneros or SCA, for example.

In an embodiment, the fibre pulp mass comprises about 40-65 % by weight material selected from the group consisting of CMP, CMTP, cTMP, HTCTMP, and mixtures thereof. It was found that this amount of high-grade and pure material is enough to prevent smells in an oven or microwave oven.

In an embodiment, the fibre pulp mass comprises at least 40 % by weight of pure grade industrial waste fibre material.

In an embodiment, the pulp has a hydrophobic additive. In most cases, this will for instance be an alkyl-keteen dimeer (AKD) or ASA. It can be possible to use a wax-like additive as well. The use and properties of this additive type of hydrophobing or gluing additives are commonly known for at least 15 years and is known in many products in the paper industry.

In an embodiment, the fibre pulp mass comprises about 1-12 % by weight (with respect to dry matter) chalk, or fillers like china clay, titanium dioxide. These additives provide dimensional stability and prevent shrinking in the drying process in a free drying oven. In an embodiment, the laminating foil is a bio-degradable, food compatible foil. Using the bio-degradable foil, it is possible to make a packaging which is compostable and biodegradable according to EN 13432:2000.

In an embodiment, the food packaging furthermore comprises a label adhered to the outside of said base and covering at least part of at least one of said outside walls. This label makes a cardboard sleeve redundant. In an embodiment, the label is a cross-shaped label. This provides a large surface for communicating with customers. Such a label can be glued to the moulded fibre outside base using water-based adhesive, for instance. Other types of adhesive may also be used, like hot-melt adhesives or pressure sensitive adhesives. A further advantage of the label is that it prevents conceivably loose fibres from being left in the package in case of a stack of nested packages. Herewith contamination of the food packaging is prevented when de-nesting the packages prior to filling the food package. Another purpose of the label is to improve the barrier performance of the packaging. To that end, the adhesive can be selected to add to that barrier property. In this respect, the label prevents moisture entering the moulded fibre material and thereby helps maintaining the stiffness of the package. Furthermore, the label may be engineered and designed to cover almost the entire outside surface of the moulded fibre material. Thus, it can improve the barrier properties, and also it can improve the aesthetic appearance of the packaging. The label may completely encompass the moulded fibre part. Furthermore, using a label, especially a label largely covering the base and at least two side walls, provides a large area for providing information to a customer buying the product. In fact, it allows a packaging concept which has a very low weight per volume contained product. In an embodiment, the moulded fibre layer has a density and thickness and the polymer foil layer has a thickness for providing a food packaging with a weight per enclosed volume ratio of less than 35 gr/dm^3, preferably less than 30 gr/dm^3. Especially when for instance a label is attached to the outside moulded fibre part is used, this and even lighter packaging seems possible. In another embodiment, the top seal material comprises a paper top layer, and one or more polymer film layers. With this, an even lighter packaging may be possible. The paper can be printed in full colour for providing customer information.

We can compare this packaging with for instance, a cPET deep drawn packaging for containing a maximum volume of 887 cm^3 including a cardboard sleeve providing information regarding the contents. This packaging has a weight per enclosed volume ratio of 45 gr/cm^3. Using the cross-shaped label, a packaging according to the invention having the same area for providing information as the sleeve is provided. In that case, however, the weight per enclosed volume ratio can be as low as 27-29 gr/cm^3.

As stated, the moulded fibre layer has a circumferential rim on said side walls and de-stacking notches within the circumference of, and adjacent to, said rim, for preventing the outside of said food packaging touching the inside of another, identical food packing when stacked in that other, identical food packaging. These notches also improve de-nesting or de-stacking in general. In an embodiment, the moulded fibre layer comprises shoulders near said rim at the inside volume, and said shoulders comprise the notches extending towards said outside of said packaging. In an embodiment, said notches extend up the plane defined by said rim.

In an embodiment, the side walls are connected by corner parts which have an inward curvature. These corn*er parts provide additional strength to the walls.

In an embodiment, the base comprises a circumferentially embossed rim, reaching out to the inside of the packaging. The rim also provides additional rigidity. Furthermore, it can provide a surface of adhering a sealing film or top seal.

In an embodiment, the moulded fibre pulp mass comprises up to 4 wt. % colour additive. In order to improve ovenability, carbon black or an other type of pigment like titanium dioxide, brick red, or the like, is used. Many soluble colorants containing acetic acid were found to produce a smell when a packaging of the invention was used in an oven.

In an embodiment, the polymer foil layer used for lamination is a bio-degradable film, in an embodiment comprising a polymer selected from the group consisting of polylactic acid, derivatives thereof, PHA, starch and modified PLA, in an embodiment said polymer foil layer is a deep-drawable PLA.

In an embodiment, at least one of the side walls or base is embossed with a marking. This provides an additional possibility for providing information to a customer, or provide an indication of the authenticity of the product.

In an embodiment, at least one of said inside volumes has a depth of at least 40 mm, up to 110 mm, preferably about 40-60 mm. In an embodiment, the walls connect to said base via a curved portion have a curvature radius of 15 mm or less. These features were found to be possible when using the moulded fibre layer. The radius is optimized for improving bonding of the lamination film to the moulded fibre material and for avoiding pinholes or cracks in the film.

The invention further relates to a food packaging, for instance a food tray, having a base and side walls from a dimensionally stable moulded fibre layer for providing rigidity to said packaging and enclosing at least one inside volume, a polymer foil layer laminated to said moulded fibre layer and having another feature disclosed in this application.

The invention further relates to a method for producing a food packaging, comprising the steps of producing a series of suction-moulded pre-shapes, free-drying said suction-moulded pre-shapes, pressing said moulded series of pre-shapes in a pressure mould with a pressure of at least 400,000 N/m^2, and applying a lamination film to the inside of said heated pre-shapes. In this way, a laminated tray is produced. This method can further have another feature disclosed in this application. The laminated trays can further be filled with a product. Next, a top seal film can be applied on said filled laminated trays.

The invention further relates to an packaging comprising one or more of the characterising features described in this description and/or shown in the attached drawings.

The invention further relates to a method comprising one or more of the characterising features described in this description and/or shown in the attached drawings.

The various aspects discussed in this patent can be combined in order to provide additional advantages.

### Description of the Drawings

The invention will be further elucidated referring to an embodiment of a laminated moulded fibre packaging shown in the attached drawings, showing in:
Fig. 1 a perspective view from above of a packaging without topseal;
fig. 2 a diagonal cross cut through fig. 1;
fig. 3 a diagonal cross cut through two stacked or nested trays of the packaging;
fig. 4 a transverse cross cut through the packaging of fig. 1;
fig. 5 a detail of a cross section through a wall part through the notch;
fig. 6 a label for a packaging of fig. 1.

### Detailed Description of Embodiments

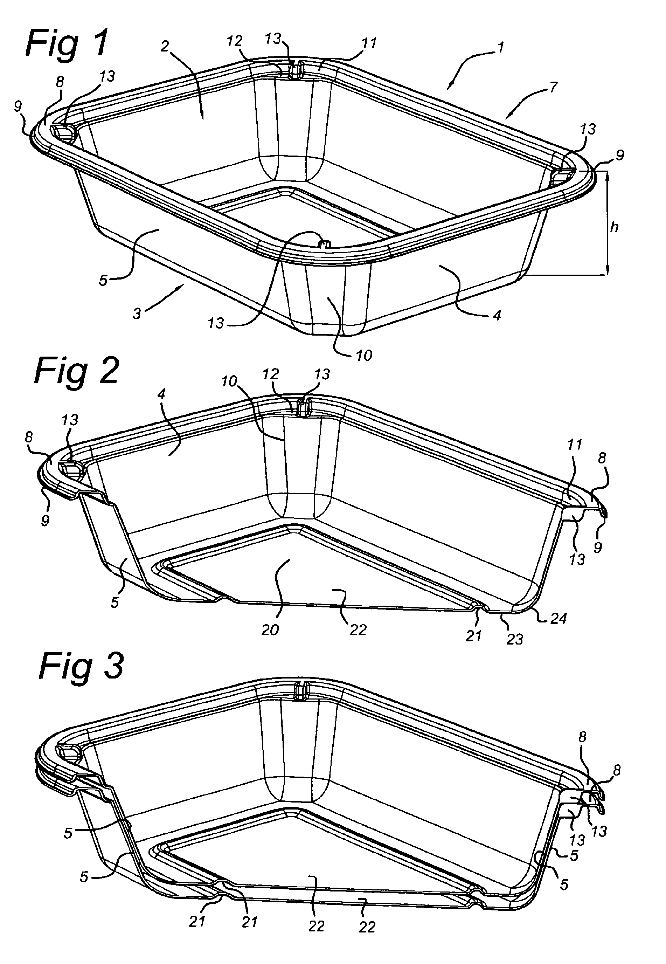

In figure 1, a perspective view of an embodiment of a packaging 1 according to the present invention is shown, without a polymer foil layer sealing off the interior of the packaging, usually called top seal or top seal film. The tray or container 1 has an inside 2 and an outside 3. This tray 1 is substantially rectangular and has side walls 4 at the shorter end and side walls 5 at the longer end. In this embodiment, the packaging has an exterior label which will be discussed more extensively below. It is clear to see that in this embodiment, the side walls 4, 5 are a little tapered towards the bottom. This is to allow the tray to be stacked.

The packaging 1 further has a rim 7 which is circumferential and which border the upper side of the packaging 1. Rim 7 has a circumferential top surface 8 which provides a substantially flat circumferential surface for attachment of a sealing foil, for instance via heat sealing. This method and sealing foils of films which can be used in food packaging are known to a person skilled in the art. These foils can be multilayered, having a low-melt layer for attaching the sealing foil, and/or a layer which can be gas-tight for modified-atmosphere packaging. The width of the substantially flat top surface 8 of rim 7 is about 4-5 mm in order to provide sufficient adhesion of the top seal foil or film.

The packaging 1 further has a rim part 9 providing an undercut, or turned-down portion. This will be discussed below. The rim part 9 provides additional rigidity.

Another eye-catching feature of the packaging 1 is the corner parts 10 connecting the side walls 4, 5. These corner parts have an inward curvature. The corner parts 10 end a little below the top surface 8 of the circumferential rim 7. It thus provides a plateau 12 or shoulder which together with wall parts 11 provides a abutment for a further packaging which may be stacked, positioned inside the packaging 1. In order to prevent the outside base and side walls of the other packaging from touching the inside of packaging 1 when stacked, and for improving de-stacking of nested packaging, cams or notches 13 are provided. The material, moulded fibre, allows the notch 13 to be (almost) solid. In that way, it is possible to use these cams as a spacer between this packaging and a next one, stacked inside the packaging. Usually, the notch 13 will extend up to the top surface 8.

In this embodiment, the notches 13 are provided near each corner. Thus, the de-stacking does not depend upon the orientation of the tray.

The packaging has a height h. The construction of the packaging and the circumferential rim 7 allow the packaging to be relatively high compared to a packaging made from a deep-drawn film.

Figure 2 is a diagonal cross cut view of the packaging of figure 1, providing a view of the inside of packaging 1. It provides a clear view on the base 20 which has a rim 21 enclosing an inner part of the base 22 and an outer part 23 of base 20. The rim 21 provides rigidity to the base 20, an prevents the base 20 from bulging out. Thus, the packaging will rest stable on a flat surface, for instance while being transported to a filling station.

The side walls 4, 5 connect to the base 20 via a rounded or curved connection area 24. The curvature of this area 24 is such that a lamination film or foil will adhere to its surface and will not come off easily.

Fig. 3 is a diagonal cross cut view showing two stacked packaging. The notches 13 extend a little inward from the line defined by the inner surface of the packaging. Thus, the outside of the inner packaging does not touch the inside of the outer packaging.

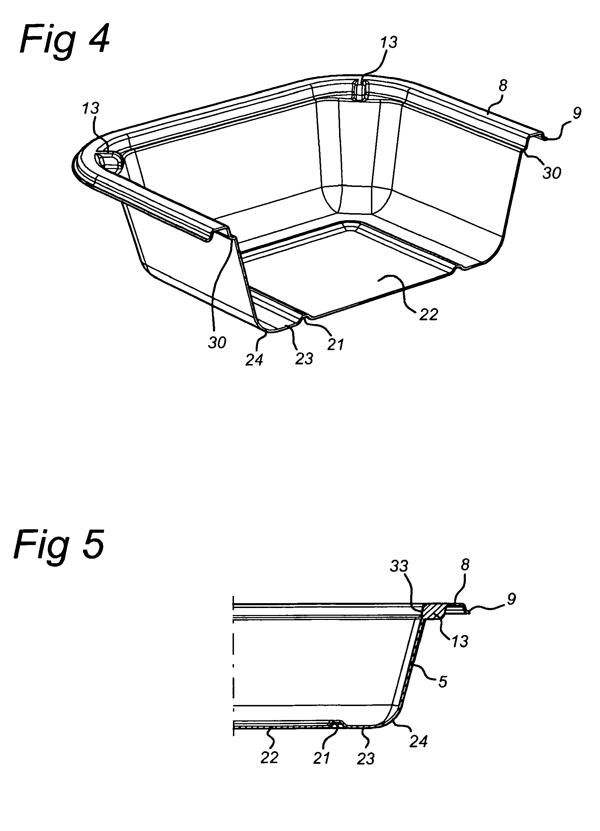

Fig. 4 is a transverse cross cut view of the packaging 1 of fig. 1. It again clearly shows the tapered side walls 4, 5 and the corner parts 10 which connect the side walls 4, 5.

This view of fig. 4 shows the underside surface of the rim 7, showing the undercut or turned down portion. The packaging further has a circumferential shoulder 30 which connects to plateau 12 of the corner parts 12. The shoulder 3- provides rigidity in a direction normal to the side walls 4, 5. This can be important then the inside of the packaging is kept at a lower pressure. It prevents the walls from bulging inward or outward.

Fig. 5 shows a detail of the notch 13. Part 33 of the notch 13 provides an abutment surface extending in inward direction of the packaging for preventing the inside of wall 5 to be touched by the outside of another packaging. It further shows that the cam or notch 13 is almost solid. This makes it possible for the cam to function as a spacer between two pair of packaging 1.

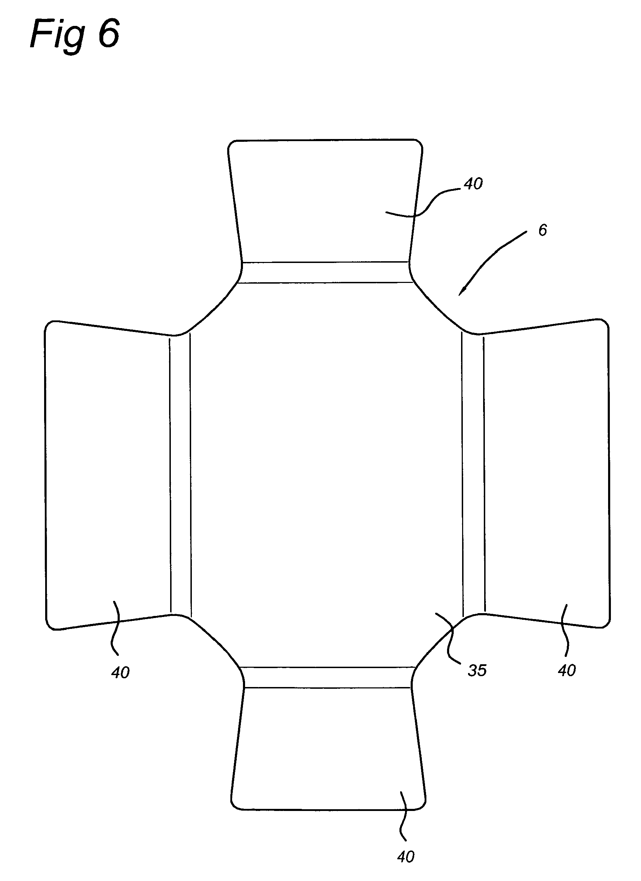

Fig. 6 shows a plan of the label 6 for the packaging of the figs. 1-3. The label is cross-shaped and adapted especially for the shape of the packaging 1 of fig. 1. The label 6 has a base-covering part 35 and parts 40 which in this embodiment cover the four side walls. The label may also be modified to also cover the rounded corner parts.

The moulded fibre tray can be produced in the following way. First, a fibre pulp is produced in a well-know way. For this application, the composition of the pulp is especially adapted to the specific use of the tray for food packaging, and its ability to be heated in an oven or microwave.

Next, using a mould, in particular a so-called suction mould, in this specific embodiment a series of pre-shaped trays are formed.

After forming the series of pre-shaped trays in the mould, the series of trays are dried in an oven. At that stage, a solid contents of about at least 95 % should be attained. Thus, about 5% moisture is retained in the moulded fibre material.

Next, the series of pre-shaped trays pass a spraying station where the surface of the series of pre-shaped tray is moisturized with a little water.

As a next step, the series of pre-shaped trays are pressed using a set of heated dies. In this process, a pressure of about 5-40 tons (1.6* 10^6 - 13* 10^6 N/m^2 for an area of product of about 0.03 m^2) is applied. The set of dies may be heated to a temperature of between about 100 - 200 °C. This will provide a smooth surface to the trays.

Next, the series of pressed trays pass a laminating station. At that stage, a lamination foil is applied on the series of trays. In order to be well integrated with the moulded fibre layer, in a embodiment the lamination foil has an adhesive layer or has a layer of (thermoplastic) polymer material which adheres to the moulded fibre substrate. An example of such an adhesive is a hot melt or another type of glue. In an embodiment, a vacuum is applied to the outside of the series of pressed trays and a overpressure is applied to the inside of the pressed trays. In that way, the laminating foil can be pressed against the inside of the pressed trays. It may also be possible to provide the moulded fibre substrate with an adhesive. In an embodiment, the moulded fibre substrate can be heated for enhancing adhesion of the laminating foil to the moulded fibre substrate.

Next, in order to prevent loose fibre ends to remain, it is possible to coat the cut edge. The coating may be a coating material which prevents or decreases adhesion of a top seal film. It is possible to also coat a further part of the rim to make the top seal film better peelable.

The laminated trays are subsequently filled with a food product, and a sealing film or top seal is adhered onto the rim. Such a sealing film or top seal film can have several layers. In an embodiment, a paper label layer provided with a relatively thin polymer film can be adhered to the rim of the laminated tray. This particular layer provides a large surface onto which information about the product can be printed. It can make the total packing of a very light weight. Furthermore, it can provide a recyclable packaging.

Before or after filling the packaging with a food product, a label can be adhered to the outside of the packaging, onto the moulded fibre substrate.

The tray can also be a multi-compartment tray with separate compartments for different products, for instance separate components of a meal. The outside of each compartment can be provided with a separate label.

The packaging can be substantially rectangular, as shown in the examples above. It may also be possible to provide the packaging in other shapes, for instance hexagonal, or octagonal. In these embodiments, de-stacking notches may be provided at or near each corner.

It will also be obvious that the description and drawings are included to illustrate some embodiments of the invention, and not to limit the scope of protection. Starting from this disclosure, many more embodiments will be evident to a skilled person which are within the scope of protection and the essence of this invention and which are obvious combinations of prior art techniques and the disclosure of this patent.

## Claims

1. A food packaging (1), for instance a food tray, having a base (20) and side walls (4, 5) from a dimensionally stable moulded fibre layer for providing rigidity to said packaging and enclosing at least one inside volume (2), a polymer foil layer laminated to said moulded fibre layer, **characterized in that** the food packaging comprises de-stacking notches (13) within the circumference of, and adjacent to, a circumferential rim (7), said notches comprise an abutment surface (12) extending to the inside of the packaging, for preventing the outside of said food packaging touching the inside of another, identical food packaging when it is stacked in the food packaging.

2. The food packaging according to claim 1, wherein said notches are substantially solid notches.

3. The food packaging according to claim 1 or 2, wherein said notches extend to the plane formed by said rim.

4. The food packaging according to claims 1-3, wherein said notches comprise an abutment surface extending to the inside of the packaging, in an embodiment normal to a nearby wall part, for preventing the side wall from touching another identical food packaging when it is stacked in the food packaging.

5. The food packaging according to any one of the preceding claims, further provided with a top seal film adhered to said rim.

6. The food packaging according to any one of the preceding claims, wherein said moulded fibre layer is produced by moulding a shape of said food packaging from a fibre pulp mass and finishing it by pressing it in a subsequent mould with a pressure of at least about 400,000 N/m^2, and wherein said fibre pulp mass comprises at least 20 % by weight of pure grade industrial waste fibre material.

7. The food packaging according to any one of the preceding claims, further comprising an additive for providing a hydrophilic surface to the moulded fibre layer, in an embodiment selected from the group consisting of an alkyl-keteen dimeer (AKD), ASA and wax.

8. The food packaging according to any one of the preceding claims, wherein said fibre pulp mass comprises about 1-12 % by weight (with respect to dry matter) chalk, or fillers like china clay, titanium dioxide.

9. The food packaging according to any one of the preceding claims, wherein said fibre pulp mass comprises at least 40 % by weight of pure grade industrial waste fibre material, in an embodiment said fibre pulp mass comprises about 40-65 % by weight material selected from the group consisting of CMP, CMTP, cTMP, HTCTMP, and mixtures thereof.

10. The food packaging according to one of the preceding claims, furthermore comprising a label (6), in an embodiment adhered to at least the outside of said base, in an embodiment a cross-shaped label, adhered to the outside of said base and covering at least part of at least one of said outside walls, in an embodiment said label covers said base, said outside walls and corner parts connecting said outside walls, thus covering the largest part of the outside of said packaging.

11. The food packaging according to one of the preceding claims, wherein said moulded fibre layer has a circumferential rim on said side walls which has a turned-down, circumferential rim portion.

12. The food packaging according to one of the preceding claims, wherein said side walls are connected by corner parts which have an inward curvature, in an embodiment said corner parts form a plateau just below the rim, in an embodiment the notches extend from said plateau.

13. The food packaging according to one of the preceding claims, wherein said polymer foil layer is a bio-degradable film, in an embodiment comprising a polymer selected from the group consisting of polylactic acid, derivatives thereof, PHA, starch and modified PLA, in an embodiment said polymer foil layer is a deep-drawable PLA.

14. The food packaging according to one of the preceding claims, wherein said moulded fibre layer has a density and thickness and said polymer foil layer has a thickness for providing a food packaging with a weight per enclosed volume ratio of less than 35 gr/dm^3, preferably less than 30 gr/dm^3.

15. A method for producing a food packaging according to a preceding claim 1-14, comprising the steps of:
- producing a series of suction-moulded pre-shapes;
- drying said suction-moulded pre-shapes;
- pressing said moulded series of pre-shapes in a pressure mould with a pressure of at least 400,000 N/m^2;
- applying a lamination film to the inside of said heated pre-shapes, comprising the further step of
- applying underpressure to bottom and overpressure to the inside of the pre-shapes while applying the lamination film, wherein said overpressure is applied via plug assisted lamination in which hot air is provided out of a plug with a plurality of nozzles blowing said hot air on the lamination film surface,
- providing de-stacking notches (13) within the circumference of, and adjacent ot, a circumferential rim, said notches comprising an abutment surface (12) extending to the inside of the packaging, for preventing the outside of said food packaging touching the inside of another, identical food packaging when it is stacked in the food packaging.

## Patentansprüche

1. Lebensmittelverpackung (1), zum Beispiel eine Lebensmittelschale, mit einer Basis (20) und Seitenwänden (4,5) aus einer dimensionsstabilen Formfaserschicht, die der Verpackung Steifheit verleiht und mindestens ein Innenvolumen (2) umschließt, wobei eine Polymerfolie an die Formfaserschicht laminiert ist, **dadurch gekennzeichnet, dass** die Lebensmittelverpackung Entstapelungskerben (13) im Umfang eines und angrenzend an einen Umfangsrand (7) aufweist, wobei die Kerben eine sich zum Inneren der Verpackung erstreckende Anschlagfläche (12) aufweisen, um zu verhindern, dass die Außenseite der Lebensmittelverpackung die Innenseite einer anderen identischen Lebensmittelverpackung berührt, wenn sie in der Lebensmittelverpackung gestapelt ist.

2. Lebensmittelverpackung nach Anspruch 1, wobei die Kerben im Wesentlichen massiv sind.

3. Lebensmittelverpackung nach Anspruch 1 oder 2, wobei sich die Kerben zur Ebene erstrecken, die von dem Rand gebildet wird.

4. Lebensmittelverpackung nach Anspruch 1 bis 3, wobei die Kerben eine Anschlagfläche aufweisen, die sich in einer Ausführungsform senkrecht zu einem nahegelegenen Wandabschnitt, zum Inneren der Verpackung erstrecken, um zu verhindern, dass die Seitenwand eine andere identische Lebensmittelverpackung berührt, wenn sie in der Lebensmittelverpackung gestapelt ist.

5. Lebensmittelverpackung nach einem der vorstehenden Ansprüche, ferner mit einer an dem Rand klebenden oberen Versiegelungsfolie.

6. Lebensmittelverpackung nach einem der vorstehenden Ansprüche, wobei die Formfaserschicht hergestellt ist, dadurch dass aus einer Faserbreimasse eine Gestalt der Lebensmittelverpackung geformt wird und diese fertiggestellt wird, indem sie in einem nachfolgenden Formwerkzeug mit einem Druck von mindestens 400.000N/m² gepresst wird, und wobei die Faserbreimasse mindestens 20 Gewichtsprozent hochreines Fasermaterial aus Industrieabfällen aufweist.

7. Lebensmittelverpackung nach einem der vorstehenden Ansprüche, außerdem mit einem Additiv, um die Formfaserschicht mit einer hydrophilen Oberfläche zu versehen, wobei in einer Ausführungsform das Additiv ausgewählt ist aus der folgenden Gruppe: Alkyl-keteen-dimeer (AKD), ASA und Wachs.

8. Lebensmittelverpackung nach einem der vorstehenden Ansprüche, wobei die Faserbreimasse ungefähr 1 bis 12 Gewichtsprozent (bezogen auf das Trockengewicht) Kalk oder Füllmittel wie Kaolin oder Titandioxid aufweist.

9. Lebensmittelverpackung nach einem der vorstehenden Ansprüche, wobei die Faserbreimasse mindestens 40 Gewichtsprozent hochreines Fasermaterial aus Industrieabfällen aufweist, wobei in einer Ausführungsform die Faserbreimasse ungefähr 40 bis 65 Gewichtsprozent Material aufweist, das aus der folgenden Gruppe ausgewählt ist: CMP, CMPT, cTMP, HTCTMP und Gemische davon.

10. Lebensmittelverpackung nach einem der vorstehenden Ansprüche, außerdem mit einem Etikett (6), das in einer Ausführungsform mindestens an der Außenseite der Basis angeklebt ist, in einer Ausführungsform ein kreuzförmiges Etikett ist, das an der Außenseite der Basis angeklebt ist und mindestens einen Teil mindestens einer der Außenwände bedeckt, wobei in einer Ausführungsform das Etikett die Basis, die Außenwände und die die Außenwände verbindenden Eckabschnitte bedeckt und somit den größten Teil der Außenseite der Verpackung bedeckt.

11. Lebensmittelverpackung nach einem der vorstehenden Ansprüche, wobei die Formfaserschicht einen Umfangsrand an den Seitenwänden aufweist, der einen abwärts gebogenen Umfangsrandabschnitt aufweist.

12. Lebensmittelverpackung nach einem der vorstehenden Ansprüche, wobei die Seitenwände durch Eckabschnitte verbunden sind, die eine einwärts gerichtete Wölbung aufweisen, wobei in einer Ausführungsform die Eckabschnitte ein Plateau unmittelbar unterhalb des Rands bilden und in einer Ausführungsform sich die Kerben von dem Plateau aus erstrecken.

13. Lebensmittelverpackung nach einem der vorstehenden Ansprüche, wobei die Polymerfolie eine biologisch abbaubare Folie ist, die in einer Ausführungsform ein Polymer aufweist, das aus der folgenden Gruppe ausgewählt ist: Polymilchsäure, Derivate davon, PHA, Stärke und modifizierte PLA, wobei in einer Ausführungsform die Polymerfolie eine tiefziehbare PLA ist.

14. Lebensmittelverpackung nach einem der vorstehenden Ansprüche, wobei die Formfaserschicht eine solche Dichte und Dicke hat und die Polymerfolie eine solche Dicke hat, um eine Lebensmittelverpackung mit einem Verhältnis von Gewicht pro eingeschlossenes Volumen von weniger als 35g/dm³, vorzugsweise von weniger als 30gr/dm³, bereitzustellen.

15. Verfahren zur Herstellung einer Lebensmittelverpackung nach einem der Ansprüche 1 bis 14 mit den folgenden Schritten:
- Herstellung einer Serie von tiefgezogenen Vorformlingen;
- Trocknen der tiefgezogenen Vorformlinge;
- Pressen der tiefgezogenen Serie von Vorformlingen in einem Druckformwerkzeug mit einem Druck von mindestens 400.000N/m²;
- Aufbringen einer Laminierungsfolie auf die Innenseite der erhitzten Vorformlinge, mit den weiteren Schritten:
- Anlegen eines Unterdrucks an den Boden und eines Überdrucks an die Innenseite der Vorformlinge während des Aufbringens der Laminierungsfolie, wobei der Überdruck über steckerunterstützte Laminierung angelegt wird, in welcher Heißluft aus einem Stecker bereitgestellt wird und mehrere Düsen die Heißluft an die Laminierungsfolienoberfläche blasen,
- Bereitstellen von Entstapelungskerben (13) im Umfang eines oder angrenzend an einen Umfangsrand, wobei die Kerben eine sich zum Inneren der Verpackung erstreckende Anschlagfläche (12) aufweisen, um zu verhindern, dass die Außenseite der Lebensmittelverpackung die Innenseite einer anderen identischen Lebensmittelverpackung berührt, wenn sie in der Lebensmittelverpackung gestapelt ist.

## Revendications

1. Emballage alimentaire (1), par exemple un plateau alimentaire, ayant une base (20) et des parois latérales (4, 5) à partir d'une couche de fibres moulée stable sur le plan dimensionnel pour fournir une rigidité audit emballage et pour enfermer au moins un volume intérieur (2), une couche de feuille de polymère stratifiée sur ladite couche de fibres moulée, **caractérisé en ce que** l'emballage alimentaire comprend des encoches de désempilement (13) à la circonférence de, et adjacent à, une nervure circonférentielle (7), lesdites encoches comprennent une surface de butée (12) s'étendant vers l'intérieur de l'emballage pour empêcher l'extérieur dudit emballage alimentaire de toucher l'intérieur d'un autre emballage alimentaire identique lorsqu'il est empilé sur l'emballage alimentaire.

2. Emballage alimentaire selon la revendication 1, dans lequel lesdites encoches sont des encoches essentiellement pleines.

3. Emballage alimentaire selon la revendication 1 ou 2, dans lequel lesdites encoches s'étendent vers le plan formé par ladite nervure.

4. Emballage alimentaire selon les revendications 1 à 3, dans lequel lesdites encoches comprennent une surface de butée s'étendant vers l'intérieur de l'emballage dans un mode de réalisation normale à une partie de paroi à proximité, pour empêcher la paroi latérale de toucher un autre emballage alimentaire identique lorsqu'il est empilé sur l'emballage alimentaire.

5. Emballage alimentaire selon l'une quelconque des revendications précédentes, muni en outre d'un film de soudure de dessus collé à ladite nervure.

6. Emballage alimentaire selon l'une quelconque des revendications précédentes, dans lequel ladite couche de fibres moulée est produite par moulage d'une forme dudit emballage alimentaire à partir d'une masse de pâte de fibres et par finition de celle-ci par compression dans un moule ultérieur sous une pression d'au moins environ 400 000 N/m², et dans lequel ladite masse de pâte de fibres comprend au moins 20 % en poids de matériau de fibres usées industrielles de qualité pure.

7. Emballage alimentaire selon l'une quelconque des revendications précédentes, comprenant en outre un additif pour fournir une surface hydrophile à la couche de fibres moulée, dans un mode de réalisation choisi dans le groupe constitué d'un dimère d'alkylcétène (AKD), d'ASA et d'une cire.

8. Emballage alimentaire selon l'une quelconque des revendications précédentes, dans lequel ladite masse de pâte de fibres comprend environ 1 à 12 % en poids (par rapport à la matière sèche) de craie ou de charges de type craie de Chine ou de dioxyde de titane.

9. Emballage alimentaire selon l'une quelconque des revendications précédentes, dans lequel ladite masse de pâte de fibres comprend au moins 40 % en poids de matériau de fibres usées industrielles de qualité pure, dans un mode de réalisation ladite masse de pâte de fibres comprend environ 40 à 65 % en poids de matériau choisi dans le groupe constitué de CMP, de CMTP, de cTMP, de HTCTMP et de mélanges de ceux-ci.

10. Emballage alimentaire selon l'une quelconque des revendications précédentes, comprenant en outre une étiquette (6), dans un mode de réalisation collée au moins sur l'extérieur de ladite base, dans un mode de réalisation une étiquette en croix collée sur l'extérieur de ladite base et recouvrant au moins une partie de l'une au moins desdites parois extérieures, dans un mode de réalisation ladite étiquette recouvre ladite base, lesdites parois extérieures et les parties de coin reliant lesdites parois extérieures, recouvrant ainsi la plus grande partie de l'extérieur dudit emballage.

11. Emballage alimentaire selon l'une quelconque des revendications précédentes, dans lequel ladite couche de fibres moulée a une nervure circonférentielle sur lesdites parois latérales qui a une partie de nervure circonférentielle tournée vers le bas.

12. Emballage alimentaire selon l'une quelconque des revendications précédentes, dans lequel lesdites parois latérales sont reliées par des parties de coin qui ont une courbure tournée vers l'intérieur, dans un mode de réalisation lesdites parties de coin forment un plateau juste en dessous de la nervure, dans un mode de réalisation les encoches s'étendent depuis ledit plateau.

13. Emballage alimentaire selon l'une quelconque des revendications précédentes, dans lequel ladite couche de feuille de polymère est un film biodégradable, dans un mode de réalisation comprenant un polymère choisi dans le groupe constitué du poly(acide lactique), de dérivés de celui-ci, de PHA, d'amidon et de PLA modifié, dans un mode de réalisation ladite couche de feuille de polymère est un PLA susceptible de subir un emboutissage profond.

14. Emballage alimentaire selon l'une quelconque des revendications précédentes, dans lequel ladite couche de fibres moulée a une masse volumique et une épaisseur et ladite couche de feuille de polymère a une épaisseur fournissant un emballage alimentaire ayant un poids rapporté au volume enfermé inférieur à 35 g/dm³, de préférence inférieur à 30 g/dm³.

15. Procédé de production d'un emballage alimentaire selon l'une quelconque des revendications 1 à 14 précédentes, comprenant les étapes suivantes :
- production d'une série de préformés moulés par aspiration ;
- séchage desdits préformés moulés par aspiration ;
- compression de ladite série moulée de préformés dans un moule sous pression à une pression d'au moins 400 000 N/m² ;
- application d'un film de stratification sur l'intérieur desdits préformés chauffés, comprenant l'étape supplémentaire suivante :
- application d'une sous-pression sur le fond et d'une surpression sur l'intérieur des préformés, tout en appliquant le film de stratification, dans lequel ladite surpression est appliquée par l'intermédiaire d'une stratification assistée par un bouchon dans laquelle de l'air chaud est fourni depuis le bouchon avec une pluralité de buses soufflant ledit air chaud sur la surface du film de stratification,
- fourniture d'encoches de désempilement (13) dans la circonférence de, et adjacentes à, une nervure circonférentielle, lesdites encoches comprenant une surface de butée (12) s'étendant vers l'intérieur de l'emballage pour empêcher l'extérieur dudit emballage alimentaire de toucher l'intérieur d'un autre emballage alimentaire identique lorsqu'il est empilé sur l'emballage alimentaire.
